# EUROPEAN PATENT SPECIFICATION

(11) **EP 3 733 884 B1**
(45) Date of publication and mention of the grant of the patent: **25.12.2024**
(21) Application number: 18909626.6
(22) Date of filing: 21.11.2018
(51) Int. Cl.: C22B 3/00, C22B 3/38, C22B 26/22, B01D 11/04

(54) **SOLVENT EXTRACTION METHOD**
LÖSUNGSMITTELEXTRAKTIONSVERFAHREN
PROCÉDÉ D'EXTRACTION DE SOLVANT

(30) Priority: 12.03.2018 JP 2018043768
(43) Date of publication of application: 04.11.2020
(73) Proprietor: SUMITOMO METAL MINING CO., LTD., Tokyo 105-8716 (JP)
(72) Inventor: OHARA Hideki, Niihama-shi, Ehime 792-0002 (JP); ASANO Satoshi, Niihama-shi, Ehime 792-0002 (JP); KOBAYASHI Hiroshi, Niihama-shi, Ehime 792-0002 (JP); TAKANO Masatoshi, Niihama-shi, Ehime 792-0002 (JP); SANJO Shota, Niihama-shi, Ehime 792-0002 (JP)
(74) Representative: Jones, Nicholas Andrew
(86) International application number: PCT/JP2018/042919
(87) International publication number: WO 2019/176175

(56) References cited:
- EP-A1- 3 222 735
- WO-A1-2007/056900
- CN-A- 103 898 323
- CN-A- 106 348 321
- CN-A- 106 348 321
- JP-A- 2003 277 846
- JP-A- 2017 226 568
- US-A1- 2004 050 212
- BAES C.F. ET AL: "The extraction of metallic species by dialkylphosphoric acids", JOURNAL OF INORGANIC AND NUCLEAR CHEMISTRY, vol. 24, no. 6, 30 November 1962 (1962-11-30), pages 707 - 720, XP055774500, ISSN: 0022-1902, DOI: 10.1016/0022-1902(62)80090-6

## Description

### TECHNICAL FIELD

The present invention relates to a solvent extraction method. More specifically, the present invention relates to a solvent extraction method to separate magnesium from an acidic aqueous solution of sulfuric acid containing nickel, cobalt, and magnesium.

### BACKGROUND ART

Various positive electrode materials have been developed as a positive electrode material of a lithium-ion battery as a secondary battery. A nickel-cobalt-manganese (NCM)-based positive electrode material referred to as a ternary system and a nickel-cobalt-aluminum (NCA)-based positive electrode material referred to as a nickel-base have been recently gathering attention.

The positive electrode material containing nickel like the NCM-based positive electrode material and the NCA-based positive electrode material are manufactured by processing an aqueous solution containing a salt of a metal, such as nickel, with an alkali and performing a burning process on the obtained metallic hydroxide. The metal salt used as the raw material includes chloride (nickel chloride) and sulfate (nickel sulfate). The use of the chloride generates a chlorine gas in the burning process, and therefore a firing furnace is likely to be corroded. Therefore, the sulfate is generally used as the metal salt.

The sulfate is, for example, manufactured by nickel smelting using a nickel oxide ore as a raw material. The nickel-oxidized ore usually contains a cobalt oxide. Therefore, the nickel smelting obtains an acidic aqueous solution of sulfuric acid containing nickel and cobalt. There may be a case where this acidic aqueous solution of sulfuric acid contains magnesium as impurities.

Manufacturing the positive electrode material with the acidic aqueous solution of sulfuric acid containing the magnesium as the raw material results in containing the magnesium as the impurities in the positive electrode material. A lithium-ion battery using the positive electrode material possibly deteriorates battery properties, such as a charge/discharge capacity. Accordingly, preliminarily removing the magnesium from the acidic aqueous solution of sulfuric acid is desired.

Patent Document 1 discloses that a solvent extraction method separates and recovers a nickel sulfate aqueous solution and a cobalt sulfate aqueous solution from an acidic aqueous solution of sulfuric acid containing nickel and cobalt. Use of a monothiophosphinic acid compound as an extractant allows obtaining a cobalt sulfate aqueous solution that hardly contains magnesium. However, the magnesium is contained in the nickel sulfate aqueous solution. Thus, selectively separating the magnesium from the acidic aqueous solution of sulfuric acid containing the nickel and the magnesium is difficult. Patent Document 2 discloses a method for preparing high purity flame retardant from solution containing cobalt of the cobalt and nickel industry. Patent Document 3 discloses a method to produce a high purity cobalt sulphate solution.

Patent Document 4 discloses a method for recovering magnesium from low-concentration nickel-cobalt from a tailings bioleaching solution.

### Citation list

### Patent document

Patent Document 1: Japanese Patent No. 4225514 Patent Document 2: CN 106 348 321 A
Patent Document 3: JP 2017 226 568 A
Patent Document 4: CN 103 898 323 A

### SUMMARY OF INVENTION

### Technical problem

In consideration of the circumstances, an object of the present invention is to provide a solvent extraction method that allows selectively separating magnesium from an acidic aqueous solution of sulfuric acid containing nickel, cobalt, and magnesium.

### Solution to problem

A solvent extraction method according to the invention as defined in claim 1 includes: bringing an acidic aqueous solution of sulfuric acid containing nickel, cobalt, and magnesium in contact with an organic solvent to selectively extract the magnesium from the acidic solution into the organic solvent; and using the organic solvent produced by diluting an extractant made of bis(2-ethylhexyl) hydrogen phosphate with a diluent. A concentration of the extractant in the organic solvent is set to 40 volume% or more and 60 volume% or less and a pH of the acidic aqueous solution of sulfuric acid is set to 1.5 or more and 2.0 or less.

Further aspects of the invention are defined by the subject-matter of dependent claims 2 and 3.

### Advantageous effects of invention

The present invention allows selectively separating the magnesium from the acidic aqueous solution of sulfuric acid containing the nickel, the cobalt, and the magnesium.

### BRIEF DESCRIPTION OF DRAWINGS

Fig. 1 is a graph showing a nickel extraction rate.
Fig. 2 is a graph showing a cobalt extraction rate.
Fig. 3 is a graph showing a magnesium extraction rate.
Fig. 4 is a graph showing a Mg/Co separation factor.
Fig. 5 is a graph showing a Mg/Ni separation factor.

### DESCRIPTION OF EMBODIMENTS

Next, one embodiment of the present invention will be described.

A solvent extraction method of this embodiment brings an acidic aqueous solution of sulfuric acid containing nickel, cobalt, and magnesium in contact with an organic solvent to extract the magnesium into the organic solvent. While the nickel and the cobalt are caused to remain in a water phase, the magnesium is extracted to an organic phase to selectively separate the magnesium.

A device used for the solvent extraction is not specifically limited. A solvent extraction device includes a mixer-settler extractor.

As the organic solvent, a solvent produced by diluting an extractant with a diluent is employed. Alkylphosphonic acid ester is used as the extractant. The alkylphosphonic acid ester includes bis(2-ethylhexyl) hydrogen phosphate (D2EHPA), 2-ethylhexyl hydrogen -2-ethylhexylphosphonate (PC-88A), and Diisooctylphosphinic acid (CYANEX272). According to the invention, the bis(2-ethylhexyl) hydrogen phosphate is used as the extractant.

As long as the extractant can be dissolved, the diluent is not specifically limited. As examples of the diluent, a naphthene-based solvent and an aromatic-based solvent can be employed.

The alkylphosphonic acid ester is one kind of an acid extractant. Taking only an action as the acid extractant into consideration, an extraction reaction is a pure acid-base reaction. An amount of substance of the extractant contributing to the extraction reaction is determined according to a concentration and a valence of an element to be extracted in the aqueous solution. In a case where the extraction reaction to all the elements is the acid-base reaction, a separation factor between the elements does not depend on the concentration of the extractant in the organic solvent.

Note that the alkylphosphonic acid ester also acts as a chelate extractant. The alkylphosphonic acid ester contains phosphorus and oxygen in molecules. In addition to the acid-base reaction, an element that forms a coordinate bond with phosphorus or oxygen is extracted by formation of a chelate compound. Increasing the concentration of the extractant in the organic solvent promotes the formation of the chelate compound. Among the elements in the aqueous solution, an element that facilitates the formation of the chelate compound increases an extraction rate compared with that of an element that is less likely to form the chelate compound.

A formation trend of the chelate compound by nickel, cobalt, and magnesium is in the order of nickel > cobalt ≈ magnesium. That is, the nickel preferentially forms the chelate compound. As the concentration of the extractant increases, the extraction of the nickel is promoted compared with that of the magnesium, and therefore a separation factor of the magnesium relative to the nickel (hereinafter referred to as a "Mg/Ni separation factor") decreases. Meanwhile, the formation trends of the chelate compound of the cobalt and the magnesium are approximately the same. Accordingly, the concentration of the extractant hardly affects the separation factor of the magnesium relative to the cobalt (hereinafter referred to as a "Mg/Co separation factor"). Accordingly, as the concentration of the extractant decreases, the Mg/Ni separation factor can be increased, thereby ensuring efficiently separating the magnesium chemically.

However, the decrease in the concentration of the extractant reduces a reaction volume, resulting in decrease in the extraction rate of the magnesium. Industrially, some extent of the magnesium extraction rate needs to be maintained. Therefore, the concentration of the extractant is adjusted to ensure maintaining a desired magnesium extraction rate.

Appropriately adjusting the concentration of the extractant allows increasing the extraction rate of the magnesium while the extraction rates of the nickel and the cobalt are suppressed to be low. Specifically, the concentration of the extractant is adjusted to be from 40 to 60 volume%. This allows selectively separating the magnesium from the acidic aqueous solution of sulfuric acid containing the nickel, the cobalt, and the magnesium.

In the acidic aqueous solution of sulfuric acid processed by the solvent extraction method according to this embodiment, the magnesium concentration decreases. Therefore, the acidic aqueous solution of sulfuric acid can be used as, for example, a raw material of a positive electrode material, such as an NCM-based positive electrode material and an NCA-based positive electrode material.

Note that the solvent extraction method according to this embodiment extracts the magnesium as impurities in the organic solvent. In a case where the nickel and the cobalt, which are the obj ective metals, are extracted in the organic solvent, the obj ective metals in the organic phase need to be back-extracted in a water phase in a post-process. In a case where a large amount of the objective metals is contained in the acidic aqueous solution of sulfuric acid, a large amount of an agent used for the back extraction, such as alkali and acid, is required. In contrast to this, since the objective metals remain in the water phase in this embodiment, the operation of back-extracting the objective metals is unnecessary. Additionally, since the magnesium extracted in the organic phase is a trace, usage of the agent used for the back extraction of the magnesium can be reduced.

### Examples

Next, the examples will be described. Those examples relating to extractant concentrations of 10 to 30 volume% or a pH of 2.5 and 3.0 do not form part of the invention.

First, an acidic aqueous solution of sulfuric acid containing nickel, cobalt, and magnesium was prepared as a raw solution. A nickel concentration is 120 g/L, a cobalt concentration is 5 g/L, and a magnesium concentration is 5 g/L in the acidic aqueous solution of sulfuric acid.

Next, an extractant was diluted with a diluent to prepare an organic solvent. Bis(2-ethylhexyl) hydrogen phosphate (BAYSOLVEX D2EHPA manufactured by LANXESS Corporation) was used as the extractant. A naphthene-based solvent (Teclean N20 manufactured by JXTG Nippon Oil & Energy Corporation) was used as the diluent. Six kinds of organic solvents whose concentrations of the extractants were different were prepared. The concentrations of the extractants in the respective organic solvents are 10 volume%, 20 volume%, 30 volume%, 40 volume%, 50 volume%, and 60 volume%.

20 ml of the raw solution and 20 ml of the organic solvent were put in a 50 ml beaker and stirred for 20 minutes. During the stirring, a sulfuric acid or sodium hydroxide aqueous solution was added, and a pH of a water phase (acidic aqueous solution of sulfuric acid) was adjusted to be any of 1.5, 2.0, 2.5, and 3.0. Note that a final additive amount of the sulfuric acid and the sodium hydroxide aqueous solutions was 1 ml or less.

After ending the stirring, the mixed liquid was left for phase separation and the water phase (acidic aqueous solution of sulfuric acid) and an organic phase (organic solvent) were each recovered. A nickel concentration, a cobalt concentration, and a magnesium concentration of the water phase and the organic phase were analyzed by ICP optical emission spectrometer. Respective masses of the nickel, the cobalt, and the magnesium in the organic phase were obtained from analysis values. Extraction rates of the nickel, the cobalt, and the magnesium were each calculated by dividing the mass in the organic phase by a mass in the raw solution. Distribution ratios of the nickel, the cobalt, and the magnesium were each calculated by dividing the concentration in the organic phase by the concentration in the water phase. Then, the distribution ratio of the magnesium was divided by the distribution ratio of the cobalt to obtain a Mg/Co separation factor. The distribution ratio of the magnesium was divided by the distribution ratio of the nickel to obtain a Mg/Ni separation factor.

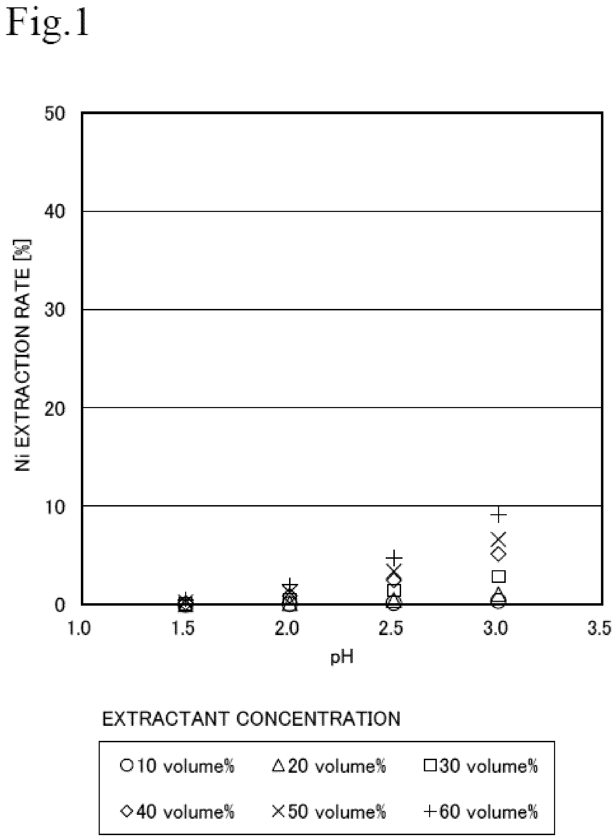

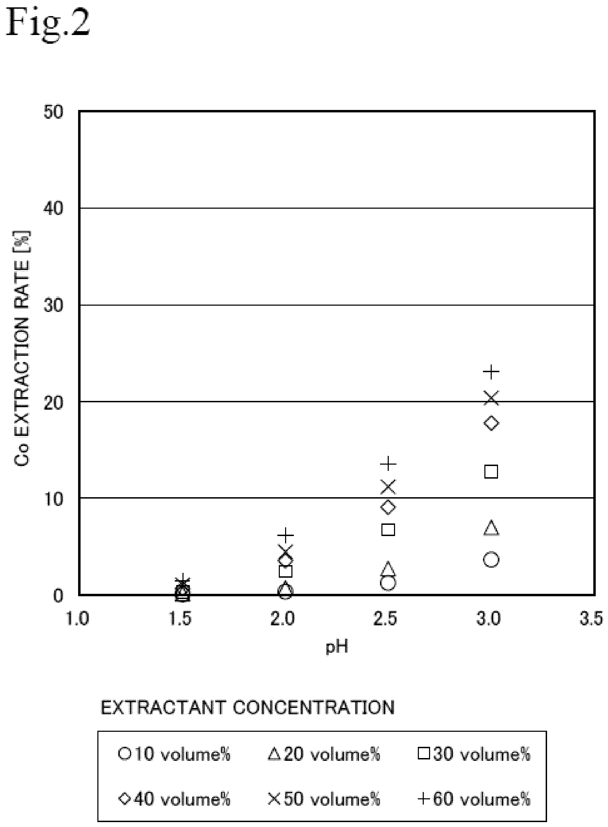

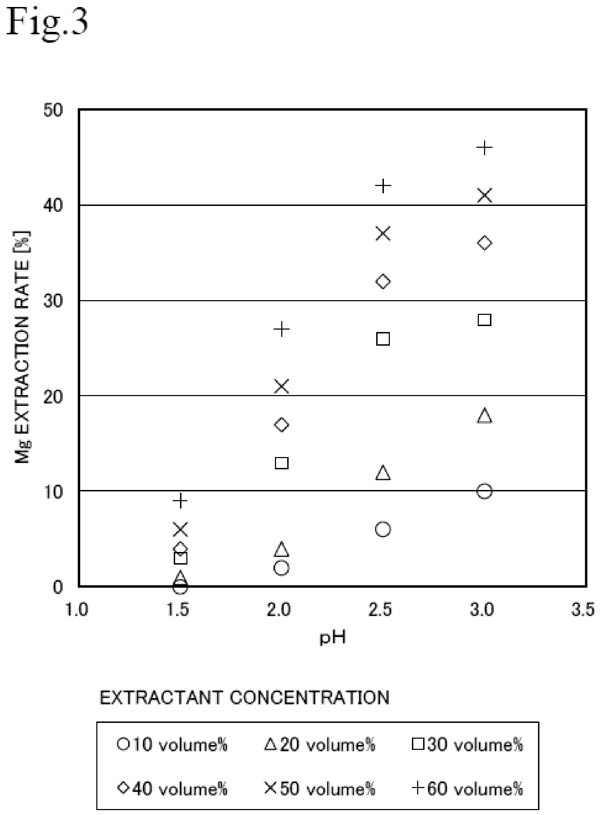

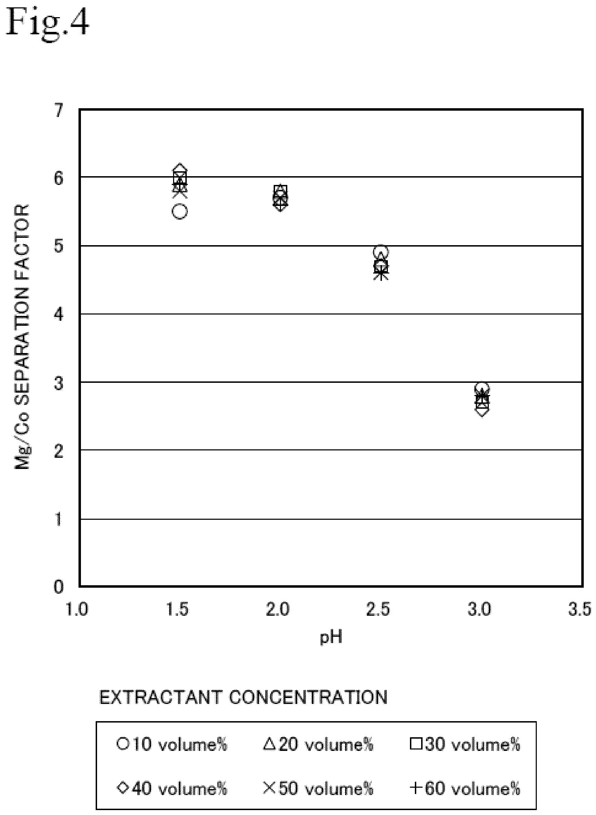

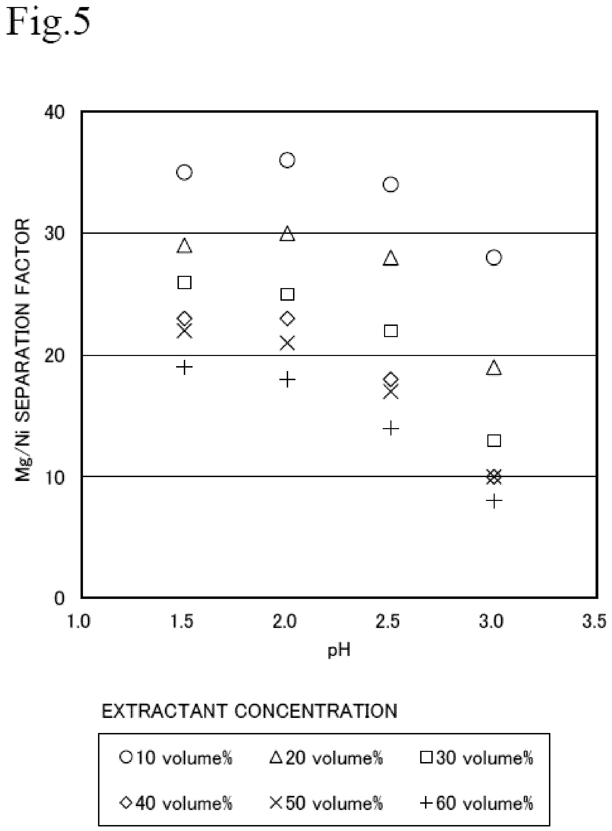

Table 1 and Fig. 1 show the extraction rate of the nickel. Table 2 and Fig. 2 show the extraction rate of the cobalt. Table 3 and Fig. 3 show the extraction rate of the magnesium. Table 4 and Fig. 4 show the Mg/Co separation factor. Table 5 and Fig. 5 show the Mg/Ni separation factor.

**[Table 1]**

| Ni Extraction Rate [%] | | | | | | |
|---|---|---|---|---|---|---|
| pH | Extractant concentration [volume%] | | | | | |
| | 10 | 20 | 30 | 40 | 50 | 60 |
| 1.5 | 0.01 | 0.04 | 0.10 | 0.18 | 0.31 | 0.53 |
| 2.0 | 0.06 | 0.15 | 0.58 | 0.92 | 1.26 | 2.00 |
| 2.5 | 0.19 | 0.48 | 1.50 | 2.50 | 3.41 | 4.75 |
| 3.0 | 0.39 | 1.08 | 2.90 | 5.17 | 6.67 | 9.17 |

**[Table 2]**

| Co Extraction Rate [%] | | | | | | |
|---|---|---|---|---|---|---|
| pH | Extractant concentration [volume%] | | | | | |
| | 10 | 20 | 30 | 40 | 50 | 60 |
| 1.5 | 0.1 | 0.2 | 0.4 | 0.7 | 1.1 | 1.6 |
| 2.0 | 0.4 | 0.8 | 2.5 | 3.6 | 4.5 | 6.2 |
| 2.5 | 1.3 | 2.8 | 6.8 | 9.1 | 11.2 | 13.6 |
| 3.0 | 3.7 | 7.0 | 12.8 | 17.8 | 20.4 | 23.1 |

**[Table 3]**

| Mg Extraction Rate [%] | | | | | | |
|---|---|---|---|---|---|---|
| pH | Extractant concentration [volume%] | | | | | |
| | 10 | 20 | 30 | 40 | 50 | 60 |
| 1.5 | 0 | 1 | 3 | 4 | 6 | 9 |
| 2.0 | 2 | 4 | 13 | 17 | 21 | 27 |
| 2.5 | 6 | 12 | 26 | 32 | 37 | 42 |
| 3.0 | 10 | 18 | 28 | 36 | 41 | 46 |

**[Table 4]**

| Mg/Co Separation Factor | | | | | | |
|---|---|---|---|---|---|---|
| pH | Extractant concentration [volume%] | | | | | |
| | 10 | 20 | 30 | 40 | 50 | 60 |
| 1.5 | 5.5 | 5.9 | 6.0 | 6.1 | 5.8 | 5.9 |
| 2.0 | 5.7 | 5.8 | 5.8 | 5.6 | 5.7 | 5.6 |
| 2.5 | 4.9 | 4.8 | 4.7 | 4.7 | 4.6 | 4.6 |
| 3.0 | 2.9 | 2.8 | 2.7 | 2.6 | 2.8 | 2.8 |

**[Table 5]**

| Mg/Ni Separation Factor | | | | | | |
|---|---|---|---|---|---|---|
| pH | Extractant concentration [volume%] | | | | | |
| | 10 | 20 | 30 | 40 | 50 | 60 |
| 1.5 | 35 | 29 | 26 | 23 | 22 | 19 |
| 2.0 | 36 | 30 | 25 | 23 | 21 | 18 |
| 2.5 | 34 | 28 | 22 | 18 | 17 | 14 |
| 3.0 | 28 | 19 | 13 | 10 | 10 | 8 |

As seen from Fig. 1 to Fig. 3, as the pH increases, the extraction rate of each metallic element increases. In the case of the nickel and the cobalt, as the pH increases, the extraction rate increases in an accelerated manner. Meanwhile, in the case of the magnesium, especially setting the concentration of the extractant to 30 volume% or more asymptotically increases the extraction rate as the pH increases. Accordingly, it is predicted that the low pH improves separation efficiency of the magnesium from the nickel and the cobalt.

The separation factors back up the above-described prediction. As seen from Fig. 4, the lower the pH is, the higher the Mg/Co separation factor becomes. Additionally, as seen from Fig. 5, as the pH decreases, the Mg/Ni separation factor tends to be high. Accordingly, it can be said that the decrease in pH facilitates separating the magnesium from the nickel and the cobalt.

As seen from Fig. 4, the concentration of the extractant hardly affects the Mg/Co separation factor. Meanwhile, as seen from Fig. 5, the Mg/Ni separation factor depends on the concentration of the extractant. The lower the concentration of the extractant is, the higher the Mg/Ni separation factor becomes. That is, as the concentration of the extractant lowers, the separation of the magnesium from the nickel and the cobalt is facilitated.

However, as seen from Fig. 3, the lower the concentration of the extractant is, the lower the extraction rate of the magnesium becomes. When the extraction rate of the magnesium is excessively low, it is not realistic to industrially separate the magnesium from the acidic aqueous solution of sulfuric acid.

Therefore, it is preferred that the concentration of the extractant is set to be 40 volume% or more and the pH of the acidic aqueous solution of sulfuric acid is set to be 1.5 or more, the concentration of the extractant is set to be 20 volume% or more and the pH of the acidic aqueous solution of sulfuric acid is set to be 2.0 or more, or the concentration of the extractant is set to be 10 volume% or more and the pH of the acidic aqueous solution of sulfuric acid is set to be 2.5 or more. Doing so allows obtaining the extraction rate of the magnesium of 4% or more. Additionally, it is more preferred that the concentration of the extractant is set to be 30 volume% or more and the pH of the acidic aqueous solution of sulfuric acid is set to be 2.0 or more, or the concentration of the extractant is set to be 20 volume% or more and the pH of the acidic aqueous solution of sulfuric acid is set to be 2.5 or more. Doing so allows obtaining the extraction rate of the magnesium of 10% or more.

As seen from Fig. 4, from a perspective of separating the magnesium from the cobalt, the pH of the acidic aqueous solution of sulfuric acid is preferably set to be 2.5 or less. Doing so allows obtaining the Mg/Co separation factor of 4 or more.

As seen from Fig. 5, from a perspective of separating the magnesium from the nickel, it is preferred that the concentration of the extractant is set to be 50 volume% or less and the pH of the acidic aqueous solution of sulfuric acid is set to be 2.5 or less, or the concentration of the extractant is set to be 60 volume% or less and the pH of the acidic aqueous solution of sulfuric acid is set to be 2.0 or less. Doing so allows obtaining the Mg/Ni separation factor of 15 or more. Additionally, it is more preferred that the concentration of the extractant is set to be 30 volume% or less and the pH of the acidic aqueous solution of sulfuric acid is set to be 2.5 or less, or the concentration of the extractant is set to be 50 volume% or less and the pH of the acidic aqueous solution of sulfuric acid is set to be 2.0 or less. Doing so allows obtaining the Mg/Ni separation factor of 20 or more.

In conclusion, the concentration of the extractant is set to be 40 to 60 volume% and the pH of the acidic aqueous solution of sulfuric acid is set to be 1.5 to 2.0, or preferably the concentration of the extractant is set to be 20 to 50 volume% and the pH of the acidic aqueous solution of sulfuric acid is set to be 2.0 to 2.5. Doing so allows obtaining the extraction rate of the magnesium of 4% or more, the Mg/Co separation factor of 4 or more, and the Mg/Ni separation factor of 15 or more.

It is preferred that the concentration of the extractant is set to be 40 to 50 volume% and the pH of the acidic aqueous solution of sulfuric acid is set to be 1.5 to 2.0, or the concentration of the extractant is set to be 20 to 30 volume% and the pH of the acidic aqueous solution of sulfuric acid is set to be 2.0 to 2.5. Doing so allows obtaining the extraction rate of the magnesium of 4% or more, the Mg/Co separation factor of 4 or more, and the Mg/Ni separation factor of 20 or more.

It is further preferred that concentration of the extractant is set to be 30 to 50 volume% and the pH of the acidic aqueous solution of sulfuric acid is set to be 2.0 to 2.5. Doing so allows obtaining the extraction rate of the magnesium of 10% or more, the Mg/Co separation factor of 4 or more, and the Mg/Ni separation factor of 15 or more.

## Claims

1. A solvent extraction method comprising:
bringing an acidic aqueous solution of sulfuric acid containing cobalt, magnesium and nickel in contact with an organic solvent to selectively extract the magnesium from the acidic aqueous solution into the organic solvent; and
using the organic solvent produced by diluting an extractant made of bis(2-ethylhexyl) hydrogen phosphate with a diluent, wherein
a concentration of the extractant in the organic solvent is set to 40 volume% or more and 60 volume% or less and a pH of the acidic aqueous solution of sulfuric acid is set to 1.5 or more and 2.0 or less.

2. The solvent extraction method according to claim 1, wherein
the concentration of the extractant in the organic solvent is set to 40 volume% or more and 50 volume% or less.

3. The solvent extraction method according to claim 1 or claim 2, wherein
the acidic aqueous solution of sulfuric acid contains Sg/L cobalt, 5 g/L magnesium and 120 g/L nickel.

## Patentansprüche

1. Lösungsmittelextraktionsverfahren, umfassend:
In-Kontakt-Bringen einer sauren wässrigen Schwefelsäurelösung, die Kobalt, Magnesium und Nickel enthält, mit einem organischen Lösungsmittel, um das Magnesium selektiv aus der sauren wässrigen Lösung in das organische Lösungsmittel zu extrahieren; und
Verwenden des organischen Lösungsmittels, das durch Verdünnen eines Extraktionsmittels, das aus Bis(2-ethylhexyl)hydrogenphosphat hergestellt ist, mit einem Verdünnungsmittel hergestellt wurde, wobei
eine Konzentration des Extraktionsmittels in dem organischen Lösungsmittel auf 40 Volumen-% oder mehr und 60 Volumen-% oder weniger eingestellt wird und ein pH-Wert der sauren wässrigen Schwefelsäurelösung auf 1,5 oder mehr und 2,0 oder weniger eingestellt wird.

2. Lösungsmittelextraktionsverfahren nach Anspruch 1, wobei
die Konzentration des Extraktionsmittels in dem organischen Lösungsmittel auf 40 Volumen-% oder mehr und 50 Volumen-% oder weniger eingestellt wird.

3. Lösungsmittelextraktionsverfahren nach Anspruch 1 oder Anspruch 2, wobei
die saure wässrige Schwefelsäurelösung 5 g/l Kobalt, 5 g/l Magnesium und 120 g/l Nickel enthält.

## Revendications

1. Procédé d'extraction de solvant, comprenant les étapes consistant à :
mettre une solution aqueuse acide d'acide sulfurique contenant du nickel, du cobalt et du magnésium en contact avec un solvant organique pour extraire le magnésium dans le solvant organique ; et
utiliser le solvant organique produit en diluant un extractant composé d'hydrogénophosphate de bis(2-éthylhexyle) avec un diluant, dans lequel
une concentration de l'agent d'extraction dans le solvant organique est fixée à 40 % en volume ou plus et à 60 % en volume ou moins, et un pH de la solution aqueuse acide d'acide sulfurique est fixé à 1,5 ou plus et à 2,0 ou moins, ou la concentration de l'agent d'extraction dans le solvant organique est fixée à 20 % en volume ou plus et à 50 % en volume ou moins et le pH de la solution aqueuse acide d'acide sulfurique est fixé à 2,0 ou plus et à 2,5 ou moins.

2. Procédé d'extraction de solvant selon la revendication 1, dans lequel
la concentration de l'extractant dans le solvant organique est fixée à 40 % en volume ou plus et à 50 % en volume ou moins.

3. Procédé d'extraction de solvant selon la revendication 1 ou la revendication 2, dans lequel
la solution aqueuse acide d'acide sulfurique contient 5 g/L de cobalt, 5 g/L de magnésium et 120 g/L de nickel.
